# EUROPEAN PATENT APPLICATION

(11) **EP 3 240 251 A1**
(43) Date of publication of application: **01.11.2017**
(21) Application number: 15871674.6
(22) Date of filing: 17.07.2015
(51) Int. Cl.: H04L 12/937

(54) **LINE CARD DETERMINATION, DETERMINATION PROCESSING METHOD AND DEVICE, AND LINE CARD DETERMINATION SYSTEM**

(30) Priority: 25.12.2014 CN 201410827365
(71) Applicant: ZTE Corporation, Shenzhen, Guangdong 518057 (CN)
(72) Inventor: TAN, Li, Shenzhen Guangdong 518057 (CN); ZHAO, Fuchuan, Shenzhen Guangdong 518057 (CN)
(74) Representative: Winter, Brandl, Fürniss, Hübner, Röss, Kaiser, Polte - Partnerschaft mbB
(86) International application number: PCT/CN2015/084375
(87) International publication number: WO 2016/101600

(57) **Abstract**

A line card determination, determination processing method and device, and a line card determination system are provided, where the determination method includes: receiving a flow table entry and/or a group table entry containing a port number issued by a controller, where the port number is that of a service flow corresponding to the flow table entry and/or the group table entry; and determining a line card corresponding to the port number according to a pre-stored corresponding relationship between line cards and port numbers of various line cards in a data forwarding device. With the use of the above-mentioned technical solutions, the problem of wasting communication resources and line card resources, since the main control board cannot determine which specific line card the flow table entry or group table entry issued by the controller should be specific to, in the related art is solved, and the flow table entry or group table entry can be issued to only an associated line card through simple mapping, thereby significantly reducing waste of communication resources and line card resources.

## Description

### TECHNICAL FIELD

The present invention relates to the field of communications, and more particularly, to a line card determination, determination processing method and device, and a line card determination system.

### BACKGROUND

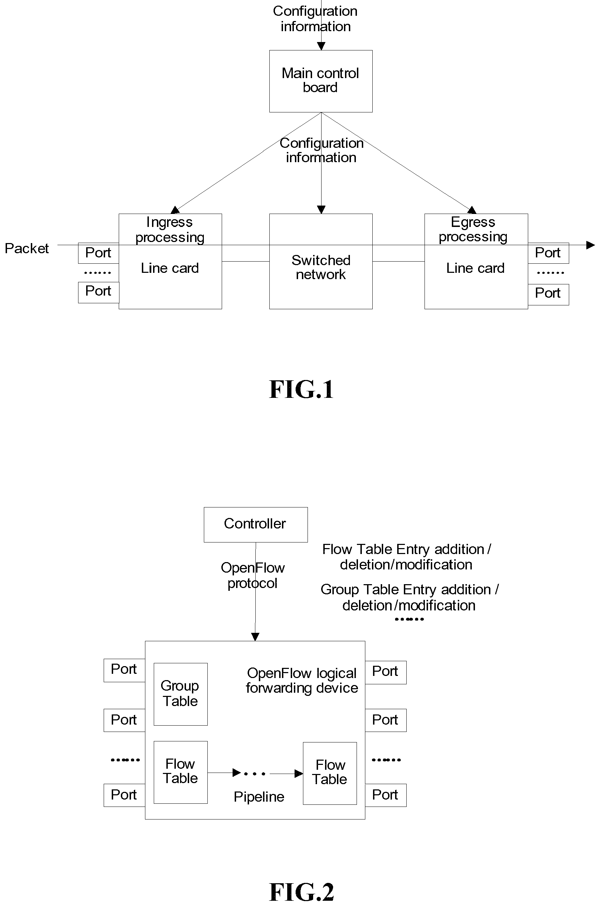

In the related art, a typical distributed data communication forwarding device (which may be referred to as a data forwarding device) is usually composed of a main control board, a plurality of line cards and a switched network, which are connected to each other through physical links. See Fig. 1. The configuration process of the distributed data communication forwarding device is usually as follows: The main control board receives external configuration information and forwards the configuration information (which has been processed or not processed) to the lines cards or the switched network. The packet is usually processed in two processes: an ingress processing process during which the packet is inputted through a port, processed by the line cards and then forwarded to the switched network; and an egress processing process during which the packet is sent from the switched network to the line cards, processed by the line cards and then sent to another port.

The Software Defined Network (SDN) has been a focus of data communication network researches in recent years and will be an important development trend in the future. The SDN abstracts the forwarding behavior of the data forwarding device into the behavior of multilevel flow tables and group tables. The configuration information is sent to an OpenFlow logical forwarding device by the far-end controller using the standard OpenFlow protocol. The main content of the OpenFlow protocol configuration information is configurations (namely operations including addition, deletion and modification) of flow table entries and group table entries. See Fig. 2.

The OpenFlow protocol standard defines only specifications of flow table entries and group table entries, but, for definite forwarding service types, it does not specify what specific flow tables compose the multilevel flow tables or specifically define what flow tables and group tables are. This makes it difficult for the SDN controller to send flow tables identifiable by the forwarding device. To solve this problem, the Open Networking Foundation (ONF), spreader of the SDN and establisher of the SDN standard, has published the Negotiable Datapath Model (NDM) standard. The NDM standard specifies that SDN users and developers may describe the forwarding model of the forwarding device for definite forwarding service types by publishing the Table Type Pattern (TTP). That is, for definite forwarding service types, they may use the TTP to describe what specific flow tables compose the multilevel flow tables and to specifically define what multilevel flow tables and group tables are. The controller and the forwarding device must be designed and developed according to the published TTP description to ensure interoperability.

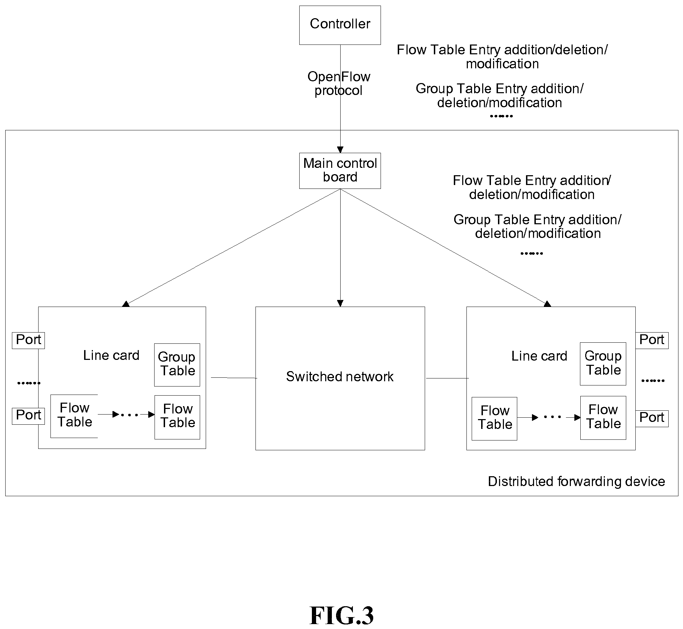

When the SDN is applied to the distributed data communication forwarding device, each line card has its own multilevel flow tables and group tables. See Figure 3. Theoretically, the controller should send flow table entries or group table entries to only associated line cards. However, the controller perceives only a logical forwarding device and does not perceive various line cards in the distributed forwarding device, so the controller just sends all flow table entries and group table entries to the distributed forwarding device indiscriminately. In addition, according to the basic concept of separated SDN control plane and forwarding plane, the distributed forwarding device should focus on only forwarding tasks while the control plane, instead of the main control board or various line cards in the forwarding device, determines which line cards flow table entries or group table entries are associated with. Therefore, when receiving flow table entries or group table entries sent from the controller, the main control board cannot determine which line card flow table entries or group table entries should be forwarded to and just broadcasts flow table entries or group table entries to various line cards, which configure all received flow table entries and group table entries. Consequently, communication resources and line card resources are wasted and forwarding capacity of the forwarding device is limited by forwarding capacity of a single line card.

In the related art, no effective solution has been put forward to solve the problem of wasting communication resources and line card resources due to the situation where the main control board cannot determine which line card flow table entries or group table entries sent from the controller should be forwarded to.

### SUMMARY

To solve the above-mentioned technical problem, embodiments of the present invention provide a line card determination, determination processing method and device, and a line card determination system.

According to an embodiment of the present invention, provided is a line card determination method, including: receiving a flow table entry and/or a group table entry containing a port number issued by a controller, where the port number is that of a service flow corresponding to the flow table entry and/or the group table entry; and determining a line card corresponding to the port number according to a pre-stored corresponding relationship between line cards and port numbers of various line cards in a data forwarding device.

In the embodiment of the present invention, before receiving the flow table entry and/or the group table entry containing the port number issued by the controller, the method further includes: numbering ports of the various line cards uniformly; and reporting a numbering result to the controller.

In the embodiment of the present invention, after determining the line card corresponding to the port number according to the pre-stored corresponding relationship between line cards and port numbers of the various line cards in the data forwarding device, the method further includes: sending the flow table entry and/or the group table entry to the line card corresponding to the port number.

According to another embodiment of the present invention, provided is a line card determination processing method, including: determining a port number of a service flow corresponding to a flow table entry and/or a group table entry according to a pre-obtained unified numbering result for various line cards in a data forwarding device; and sending the flow table entry and/or the group table entry containing the port number to the main control board of a data forwarding device.

In the embodiment of the present invention, before determining the port number of the service flow corresponding to the flow table entry and/or the group table entry according to the pre-obtained unified numbering result for the various line cards in the data forwarding device, the method further includes: obtaining a processing table type of a to-be-issued flow table entry and/or group table entry, where the processing table type includes ingress processing table and egress processing table; and determining a port number type of the service flow corresponding to the flow table entry and/or the group table entry according to the processing table type, where the port number type includes input port number and output port number.

In the embodiment of the present invention, after determining the port number type of the service flow corresponding to the flow table entry and/or the group table entry according to the processing table type, the method further includes: adding a first port number as an input port number of the service flow into a specified field in the flow table entry and/or the group table entry with a processing table type as the ingress processing table; and adding a second port number as an output port number of the service flow into a specified field in the flow table entry and/or the group table entry with a processing table type as the egress processing table.

According to another embodiment of the present invention, provided is a line card determination system, including: a controller, and a main control board and a line card located at a data forwarding device, where the controller is configured to receive a unified numbering result of various line cards in the data forwarding device reported by the main control board, determine a port number of a service flow corresponding to a flow table entry and/or a group table entry according to the unified numbering result, and send the flow table entry and/or the group table entry containing the port number to the main control board; and the main control board is configured to determine a line card corresponding to the port number of the service flow according to a pre-stored corresponding relationship between line cards and port numbers of the various line cards.

According to another embodiment of the present invention, provided is a line card determination device, which is applied to a main control board, including: a receiving module, which is configured to receive a flow table entry and/or a group table entry containing a port number issued by a controller, where the port number is that of a service flow corresponding to the flow table entry and/or the group table entry; and a determining module, which is configured to determine a line card corresponding to the port number according to a pre-stored corresponding relationship between line cards and port numbers of various line cards in a data forwarding device.

In the embodiment of the present invention, the device further includes: a numbering module, which is configured to number ports of the various line cards uniformly; and a reporting module, which is configured to report a numbering result to the controller.

According to another embodiment of the present invention, provided is a line card determination processing device, which is applied to a controller, including: a first determining module, which is configured to determine a port number of a service flow corresponding to a flow table entry and/or a group table entry according to a pre-obtained unified numbering result for various line cards in a data forwarding device; and a sending module, which is configured to send the flow table entry and/or the group table entry containing the port number to the main control board of the data forwarding device.

In the embodiment of the present invention, the device further includes: an obtaining module, which is configured to obtain a processing table type of a to-be-issued flow table entry and/or group table entry, where the processing table type includes ingress processing table and egress processing table; and a second determining module, which is configured to determine a port number type of the service flow corresponding to the flow table entry and/or the group table entry according to the processing table type, where the port number type includes input port number and output port number.

Through embodiments of the present invention, receiving flow table entries and/or group table entries containing port numbers issued by the controller enables determining which line card flow table entry or group table entry should be forwarded to according to a mapping relationship between port numbers and line cards, so that the problem of wasting communication resources and line card resources, since the main control board cannot determine which specific line card the flow table entry or group table entry issued by the controller should be issued to, in the related art is solved, and the flow table entry or group table entry can be issued to only an associated line card through simple mapping, thereby significantly reducing waste of communication resources and line card resources.

### BRIEF DESCRIPTION OF DRAWINGS

The accompanying drawings described herein are used for providing a further understanding of the present invention, and forming a part of the present application. The schematic embodiments and descriptions thereof of the present invention are used for explaining the present invention, and do not form improper limits to the present invention. In the accompanying drawings:
Fig. 1 is an architecture diagram illustrating a distributed data communication forwarding device in the related art;
Fig. 2 is an architecture diagram illustrating an SDN controller and a forwarding device in the related art;
Fig. 3 is an exemplary diagram illustrating application of the SDN to a distributed data communication forwarding device in the related art;
Fig. 4 is a flowchart illustrating a line card determination method according to an embodiment of the present invention;
Fig. 5 is a block diagram illustrating a line card determination device according to an embodiment of the present invention;
Fig. 6 is another block diagram illustrating a line card determination device according to an embodiment of the present invention;
Fig. 7 is a flowchart illustrating a line card determination processing method according to an embodiment of the present invention;
Fig. 8 is a block diagram illustrating a line card determination processing device according to an embodiment of the present invention;
Fig. 9 is another block diagram illustrating a line card determination processing device according to an embodiment of the present invention;
Fig. 10 is a block diagram illustrating a line card determination processing system according to an embodiment of the present invention;
Fig. 11 is a block diagram illustrating a forwarding device according to preferred embodiment I of the present invention; and
Fig. 12 is a schematic diagram illustrating TTP 1 of a distributed forwarding device according to preferred embodiment I of the present invention.

### DETAILED DESCRIPTION

The present invention will be described hereinafter in detail with reference to the accompanying drawings in connection with embodiments. It is to be noted that if not in collision, embodiments and features therein in the present application may be combined with each other.

Other features and advantages of the present invention will be elaborated hereinafter in the specification, and moreover, partially become apparent from the specification, or will be understood through implementation of the present invention. The object and other advantages of the present invention may be achieved and obtained through structures set forth in the specification, claims and drawings.

Technical solutions in embodiments of the present invention will be described clearly and completely in connection with the accompanying drawings in embodiments of the present invention from which technical solutions will be apparent to those skilled in the art. Embodiments described below are part, not all, of embodiments of the present invention. On the basis of embodiments in the present invention, all other embodiments obtained by those skilled in the art without creative work are within the scope of the present invention.

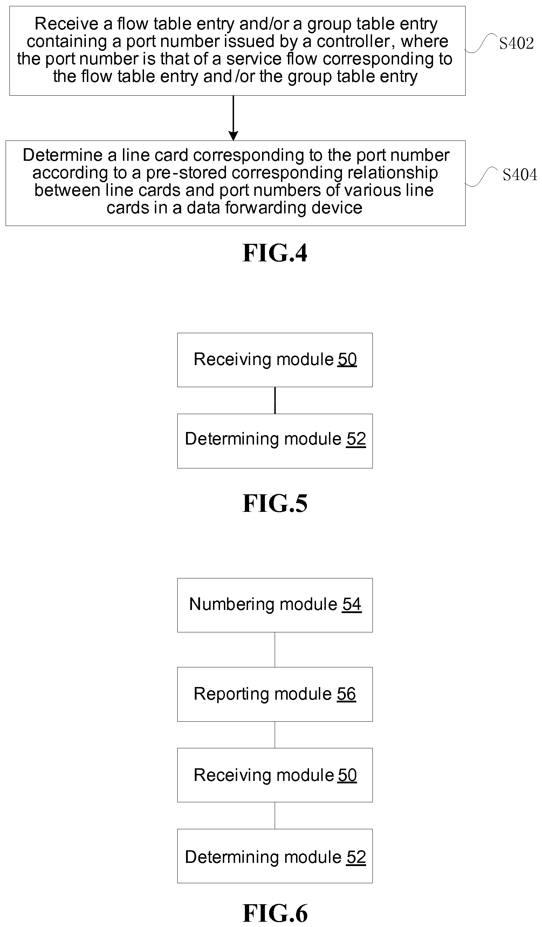

To solve the above-mentioned technical problem, an embodiment provides a line card determination method. Fig. 4 is a flowchart illustrating a line card determination method according to an embodiment. As shown in Fig. 4, the method includes following steps.

In step S402: a flow table entry and/or a group table entry containing a port number and issued by a controller is received, where the port number is that of a service flow corresponding to the flow table entry and/or the group table entry; and
in step S404: a line card corresponding to the port number is determined according to a pre-stored corresponding relationship between line cards and port numbers of various line cards in a data forwarding device.

Through the above-mentioned steps, the problem of wasting communication resources and line card resources, since the main control board cannot determine which specific line card the flow table entry or the group table entry issued by the controller should be issued to, is solved by adopting technical solutions including receiving a flow table entry and/or a group table entry containing a port number and issued by the controller, and determining which line card should be forwarded to according to a mapping relationship between port numbers and line cards, so that the flow table entry or the group table entry can be issued to only an associated line card through simple mapping, thereby significantly reducing waste of communication resources and line card resources, and further improving processing speed of flow table entries and/or group table entries.

Optionally, before the step S402 is performed, following technical solutions may further be performed: numbering ports of various line cards uniformly and reporting a numbering result to the controller. For example, various line cards may be uniformly and consecutively numbered with port number 1, port number 2, ... and port number N in order. It is better to ensure that port numbers of various line cards are different, that is, port number 2 should not correspond to multiple line cards.

Of course, in a specific implementation process, after technical solutions represented by step S404 are completely performed, following technical solutions may further be performed: sending the flow table entry and/or the group table entry to the line card corresponding to the port number, so that the corresponding line card can correspondingly process configuration information of the flow table entry and/or the group table entry, so as to avoid the problem of wasting line card resources due to broadcasting of the flow table entry and/or the group table entry to all line cards in a data forwarding device by the main control board, thereby sending the flow table entry and/or the group table entry to the corresponding line card at one stroke.

The present embodiment further provides a line card determination device, which is applied to a main control board and configured to implement the above-mentioned embodiment and preferred implementation. What has been described will not be repeated. Modules involved in the device will be described below. As used below, the term "module" can implement a combination of software and/or hardware with preset functions. The device described in following embodiments is preferably implemented by software, but implementation by hardware or a combination of software and hardware is also possible and conceived. Fig. 5 is a block diagram illustrating a line card determination device according to an embodiment of the present invention. As shown in Fig. 5, the device includes:
a receiving module 50, which is configured to receive a flow table entry and/or a group table entry containing a port number and issued by a controller, where the port number is that of a service flow corresponding to the flow table entry and/or the group table entry; and
a determining module 52, which is configured to determine a line card corresponding to the port number according to a pre-stored corresponding relationship between line cards and port numbers of various line cards in a data forwarding device.

Through combined effect of the above-mentioned modules, the problem of wasting communication resources and line card resources, since the main control board cannot determine which specific line card the flow table entry or the group table entry issued by the controller should be issued to, is solved by adopting technical solutions including receiving a flow table entry and/or a group table entry containing a port number and issued by the controller, and determining which line card should be forwarded to according to a mapping relationship between port numbers and line cards, so that the flow table entry or the group table entry can be issued to only an associated line card through simple mapping, thereby significantly reducing waste of communication resources and line card resources, and further improving processing speed of flow table entries and/or group table entries.

Optionally, Fig. 6 is another block diagram illustrating a line card determination device according to an embodiment of the present invention. As shown in Fig. 6, the line card determination device further includes: a numbering module 54, which is configured to number ports of various line cards uniformly; and a reporting module 56, which is connected with the numbering module 54 and configured to report a numbering result to the controller.

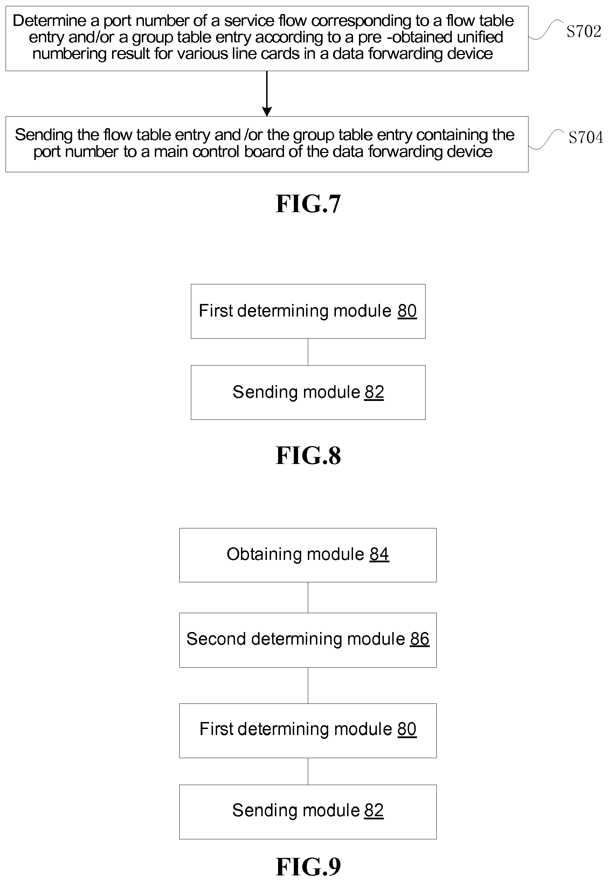

To improve the line card determination process provided in the above-mentioned embodiment, an embodiment of the present invention further provides a line card determination processing method. Fig. 7 is a flowchart illustrating a line card determination processing method according to an embodiment of the present invention. As shown in Fig. 7, the line card determination processing method includes following steps.

In step S702: a port number of a service flow corresponding to a flow table entry and/or a group table entry is determined according to a pre-obtained unified numbering result for various line cards in a data forwarding device; and

in step S704: sending the flow table entry and/or the group table entry containing the port number to a main control board of the data forwarding device.

Through the above-mentioned steps, the problem of wasting communication resources and line card resources, since the main control board cannot determine which specific line card the flow table entry or the group table entry issued by the controller should be issued to, is solved by adopting technical solutions including issuing a flow table entry and/or a group table entry containing a port number to the main control board, and performing corresponding processing by the main control board, so that the flow table entry or the group table entry can be issued to only an associated line card through simple mapping, thereby significantly reducing waste of communication resources and line card resources, and further improving processing speed of flow table entries and/or group table entries.

In an optional example of an embodiment of the present invention, before technical solutions in step S702 are performed, following processes may further be performed: obtaining a processing table type of a to-be-issued flow table entry and/or group table entry, where the processing table type includes ingress processing table and egress processing table; determining a port number type of the service flow corresponding to the flow table entry and/or the group table entry according to the processing table type, where the port number type includes input port number and output port number; further, adding a first port number as an input port number of the service flow to a specified field in the flow table entry and/or the group table entry with a processing table type as the ingress processing table; and adding a second port number as an output port number of the service flow to a specified field in the flow table entry and/or the group table entry with a processing table type as the egress processing table.

On the basis of the line card determination process and the line card determination processing process provided in the above-mentioned embodiments, an example is used in combination below to explain the above-mentioned technical solutions but is not used for limiting embodiments of the present invention.
In step 1, descriptions about whether a table is an ingress processing table or egress processing table are added in descriptions of Flow Table and Group Entry Type of TTP;
in step 2, in the OpenFlow standard, port number descriptions are added to Flow Table Entries and Group Entry;
in step 3, during power-on initialization of the forwarding device, the main control board numbers ports on various line cards uniformly, saves a mapping relationship between line cards and unified port numbers locally, and uploads the unified port numbers to the controller;
in step 4, when the controller is to issue Flow Table Entry or Group Entry to the forwarding device, port numbers are configured based on descriptions in TTP about whether corresponding Flow Table and Group Entry Type are ingress processing tables or egress processing tables according to following rules:
   1. When Flow Table Entry or Group Entry belongs to ingress processing table, content of the port number is an input port number of a corresponding service flow; and
   2. when Flow Table Entry or Group Entry belongs to egress processing table, content of the port number is an output port number of a corresponding service flow.

And, in step 5, the main control board extracts port number descriptions in the received Flow Table Entry and Group Entry, obtains a specific line card by inverse-mapping according to the mapping relationship between line cards and unified port numbers, and forwards Flow Table Entry and Group Entry to the corresponding line card.

The present embodiment further provides a line card determination processing device, which is applied to a controller and configured to implement the above-mentioned embodiments and preferred implementations. What has been described will not be repeated. Modules involved in the device will be described below. As used below, the term "module" can implement a combination of software and/or hardware with preset functions. The device described in following embodiments is preferably implemented by software, but implementation by hardware or a combination of software and hardware is also possible and conceived. Fig. 8 is a block diagram illustrating a line card determination processing device according to an embodiment of the present invention. As shown in Fig. 8, the device includes:
a first determining module 80, which is configured to determine a port number of a service flow corresponding to a flow table entry and/or a group table entry according to a pre-obtained unified numbering result for various line cards in a data forwarding device; and
a sending module 82, which is connected with the first determining module 80 and configured to send the flow table entry and/or the group table entry containing the port number to the main control board of the data forwarding device.

Through combined effect of the above-mentioned modules, the problem of wasting communication resources and line card resources, since the main control board cannot determine which specific line card the flow table entry or the group table entry issued by the controller should be issued to, is solved by adopting technical solutions including issuing a flow table entry and/or a group table entry containing a port number to the main control board, and performing corresponding processing by the main control board, so that the flow table entry or the group table entry can be issued to only an associated line card through simple mapping, thereby significantly reducing waste of communication resources and line card resources, and further improving processing speed of flow table entries and/or group table entries.

A further improvement to the technical solutions of an embodiment of the present invention, as shown in Fig. 9, lies in that the device further includes: an obtaining module 84, which is configured to obtain a processing table type of a to-be-issued flow table entry and/or group table entry, where the processing table type includes ingress processing table and egress processing table; and a second determining module 86, which is connected with the obtaining module 84 and configured to determine a port number type of the service flow corresponding to the flow table entry and/or the group table entry according to the processing table type, where the port number type includes input port number and output port number.

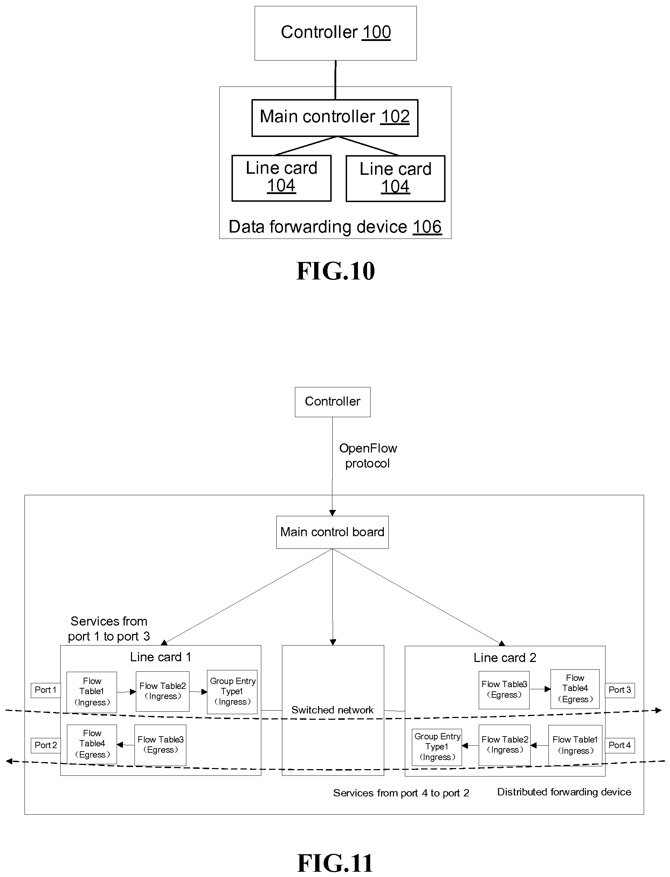

An embodiment of the present invention, as shown in Fig. 10, further provides a line card determination system, including: a controller 100, and a main control board 102 and a line card 104 located at a data forwarding device 106, where the controller 100 is configured to receive a unified numbering result of various line cards 104 in the data forwarding device 106 reported by the main control board 102, determine a port number of a service flow corresponding to a flow table entry and/or a group table entry according to the unified numbering result, and send the flow table entry and/or the group table entry containing the port number to the main control board 102; and the main control board 102 determines a line card corresponding to the port number of the service flow according to a pre-stored corresponding relationship between line cards and port numbers of the various line cards 104.

Through interaction process among various parts of the line card determination system, the controller can indirectly identify line cards associated with flow table entries or group table entries, and the main control board can send flow table entries or group table entries to only the associated line cards through simple mapping, rather than completing work about judging which line card is associated with the flow table entry or group table entry by the main control board or the line card itself in the distributed forwarding device, thereby solving the problem of wasting communication resources and line card resources and the problem that forwarding capacity of the whole forwarding device is limited by forwarding capacity of a single line card.

The process of determining the above-mentioned line cards will be described in detail in connection with the following preferred embodiment from which the process will be apparent.

### Preferred embodiment I

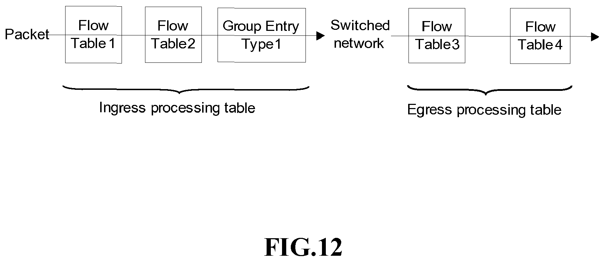

In step 1, as shown in Fig. 11, the distributed data communication forwarding device is composed of a main control board, two line cards (line card 1 and line card 2) and a switched network card. Line card 1 and line card 2 each has two ports. The published TTP of the distributed forwarding device is named as TTP 1, which is composed of four flow tables and a group entry type including: Flow Table 1, Flow Table 2, Flow Table 3, Flow Table 4 and Group Entry Type 1 (as shown in Fig. 12)., Flow Table 1, Flow Table 2 and Group Entry Type 1 in TTP 1 are ingress processing tables, so that description "ingress or egress": "ingress" is added to Flow Table descriptions of Flow Table 1 and Flow Table 2, and description "ingress or egress": "ingress" is added to Group Entry Type descriptions of Group Entry Type 1, to indicate that all of them are ingress processing tables. Flow Table 3 and Flow Table 4 are egress processing tables, so that description "ingress or egress": "egress" is added to Flow Table descriptions of Flow Table 3 and Flow Table 4, to indicate that they are egress processing tables.

In step 2, in OpenFlow standard, the structure describing Flow Table Entry is struct of p_flow_mod, where a field pad is used for port number description; and the structure describing a Group Table Entry is struct of p_group_mod, where a field pad is used for port number description.

In step 3, during power-on initialization of the forwarding device, the main control board numbers ports on various line cards uniformly, where the ports include: port 1, port 2, port 3 and port 4, saves a mapping relationship between line cards and unified port numbers (as shown in Table 1 below), and uploads the unified port numbers to the controller.

**Table 1**

| Unified Port Numbers | Line Card |
|---|---|
| 1 | 1 |
| 2 | 1 |
| 3 | 2 |
| 4 | 2 |

In step 4, for services from port 1 to port 3 (as shown in Fig. 11), the controller is intended to send Entry configurations of Flow Table 1, Flow Table 2, Group Entry Type 1, Flow Table 3 and Flow Table 4 to the forwarding device. According to TTP 1 descriptions, Flow Table 1, Flow Table 2 and Group Entry Type 1 are ingress processing tables, so that input port number 1 is filled into all fields pad of Flow Table Entry and Group Entry; and since Flow Table 3 and Flow Table 4 are egress processing tables, output port number 3 corresponding to service flows is filled into all fields pad of the Flow Table Entry.

In step 5, when the Entry configurations of Flow Table 1, Flow Table 2 and Group Entry Type 1 of the services from port 1 to port 3 issued by the controller are received by the main control board, fields pad extracted from Flow Table Entry and Group Entry correspond to port number 1, line card 1 is mapped out according to the mapping relationship between line cards and unified port numbers (as shown in Table 1), therefore the Entry configurations are forwarded to line card 1. When the Entry configurations of Flow Table 3 and Flow Table 4 of the services from port 1 to port 3 issued by the controller are received by the main control board, fields pad extracted from Flow Table Entry correspond to port number 3, line card 2 is mapped out according to the mapping relationship between line cards and unified port numbers, therefore the Entry configurations are forwarded to line card 2.

In step 6, for services from port 4 to port 2 (as shown in Fig. 11), the controller is intended to send Entry configurations of Flow Table 1, Flow Table 2, Group Entry Type 1, Flow Table 3 and Flow Table 4. Since Flow Table 1, Flow Table 2 and Group Entry Type 1 are ingress processing tables, input port number 4 is filled into all fields pad of Flow Table Entry and Group Entry; and, since Flow Table 3 and Flow Table 4 are egress processing tables, output port number 2 corresponding to service flows is filled into all fields pad of the Flow Table Entry of the Flow Table 3 and Flow Table 4; and

in step 7, when the Entry configurations of Flow Table 1, Flow Table 2 and Group Entry Type 1 of the services from port 4 to port 2 issued by the controller are received by the main control board, fields pad extracted from Flow Table Entry and Group Entry correspond to port number 4, line card 2 is mapped out according to the mapping relationship between line cards and unified port numbers, therefore the Entry configurations are forwarded to line card 2. When the Entry configurations of Flow Table 3 and Flow Table 4 of the services from port 4 to port 2 issued by the controller are received by the main control board, fields pad extracted from Flow Table Entry correspond to port number 2, line card 1 is mapped out according to the mapping relationship between line cards and unified port numbers, therefore the Entry configurations are forwarded to line card 1.

On the basis of the above-mentioned technical solutions provided by preferred embodiment I and the concept of separated SDN control plane and forwarding plane, for the case where the SDN is applied to a distributed data communication forwarding device, the controller can indirectly identify the line cards associated with flow table entries or group table entries through expansion of NDM TTP descriptions and OpenFlow protocol, and the main control board can send flow table entries or group table entries to only the associated line cards through simple mapping, rather than completing work about judging which line card is associated with the flow table entry or group table entry by the main control board or the line card itself in the distributed forwarding device, thereby solving the problem of wasting communication resources and line card resources and the problem that forwarding capacity of the whole forwarding device is limited by forwarding capacity of a single line card.

In conclusion, embodiments of the present invention have following technical effects: the problem of wasting communication resources and line card resources, since the main control board cannot determine which specific line card the flow table entry or the group table entry issued by the controller should be issued to, in the related art is solved, and the flow table entry or the group table entry can be issued to only an associated line card through simple mapping, thereby significantly reducing waste of communication resources and line card resources, and further improving processing speed of flow table entries and/or group table entries.

Another embodiment further provides a software for implementing technical solutions described in the above-mentioned embodiments and preferred implementations.

Another embodiment further provides a storage medium storing the above-mentioned software, and the storage medium includes but is not limited to an optical disk, a floppy disk, a hard disk, an erasable memory and the like.

It is to be noted that the terms "first", "second" and the like in the specification, claims and accompanying drawings of the present invention are used for distinguishing similar objects but are not necessarily used for describing a particular order or sequence. It is to be understood that the objects used in this way are interchangeable where appropriate so that embodiments of the present invention described herein may also be implemented in sequences not illustrated or described herein. In addition, the terms "comprising", "including" or any other variations thereof herein are intended to encompass a non-exclusive inclusion. For example, a process, method, system, product or device that includes a series of steps or elements not only includes the expressly listed steps or elements but may also include other steps or elements that are not expressly listed or are inherent to such process, method, system, product or device.

Obviously, those skilled in the art should know that each above-mentioned module or step of the present invention may be implemented by a universal computing device, they may be concentrated on a single computing device or distributed on a network formed by a plurality of computing devices, and optionally, they may be implemented by program codes executable by the computing devices, so that they may be stored in a storage device for execution by the computing devices, and in some circumstances, the shown or described steps may be executed in sequences different from those described here, or they may be made into various integrated circuit modules separately, or multiple modules or steps therein may be made into a single integrated circuit module for implementation. Therefore, the present invention is not limited to any specific hardware and software combination.

The above are only preferred embodiments of the present invention and not intended to limit the present invention, and for those skilled in the art, the present invention may have various modifications and variations. Any modifications, equivalent replacements, improvements and the like within the spirit and principle of the present invention shall fall within the scope of protection of the present invention.

### INDUSTRIAL APPLICABILITY

Through the above-mentioned technical solutions provided by the present invention, receiving flow table entries and/or group table entries containing port numbers issued by the controller enables determining which line card flow table entry or group table entry should be forwarded to according to a mapping relationship between port numbers and line cards, so that the problem of wasting communication resources and line card resources, since the main control board cannot determine which specific line card the flow table entry or the group table entry issued by the controller should be issued to in the related art is solved, and the flow table entry or the group table entry can be issued to only an associated line card through simple mapping, thereby reducing waste of communication resources and line card resources.

## Claims

1. A line card determination method, comprising:
receiving a flow table entry and/or a group table entry containing a port number issued by a controller, wherein the port number is that of a service flow corresponding to the flow table entry and/or the group table entry; and
determining a line card corresponding to the port number according to a pre-stored corresponding relationship between line cards and port numbers of various line cards in a data forwarding device.

2. The method of claim 1, before receiving the flow table entry and/or the group table entry containing the port number issued by the controller, further comprising:
numbering ports of the various line cards uniformly; and
reporting a numbering result to the controller.

3. The method of claim 1 or 2, after determining the line card corresponding to the port number according to the pre-stored corresponding relationship between line cards and port numbers of the various line cards in the data forwarding device, further comprising:
sending the flow table entry and/or the group table entry to the line card corresponding to the port number.

4. A line card determination processing method, comprising:
determining a port number of a service flow corresponding to a flow table entry and/or a group table entry according to a pre-obtained unified numbering result for various line cards in a data forwarding device; and
sending the flow table entry and/or the group table entry containing the port number to a main control board of the data forwarding device.

5. The method of claim 4, before determining the port number of the service flow corresponding to the flow table entry and/or the group table entry according to the pre-obtained unified numbering result for the various line cards in the data forwarding device, further comprising:
obtaining a processing table type of a to-be-issued flow table entry and/or group table entry, wherein the processing table type includes ingress processing table and egress processing table; and
determining a port number type of the service flow corresponding to the flow table entry and/or the group table entry according to the processing table type, wherein the port number type includes input port number and output port number.

6. The method of claim 5, after determining the port number type of the service flow corresponding to the flow table entry and/or the group table entry according to the processing table type, further comprising:
adding a first port number as an input port number of the service flow into a specified field in the flow table entry and/or the group table entry with a processing table type as the ingress processing table; and
adding a second port number as an output port number of the service flow into a specified field in the flow table entry and/or the group table entry with a processing table type as the egress processing table.

7. A line card determination system, comprising: a controller, and a main control board and a line card located at a data forwarding device, wherein
the controller is configured to receive a unified numbering result of various line cards in the data forwarding device reported by the main control board, determine a port number of a service flow corresponding to a flow table entry and/or a group table entry according to the unified numbering result, and send the flow table entry and/or the group table entry containing the port number to the main control board; and
the main control board is configured to determine a line card corresponding to the port number of the service flow according to a pre-stored corresponding relationship between line cards and port numbers of the various line cards.

8. A line card determination device, which is applied to a main control board, comprising:
a receiving module, which is configured to receive a flow table entry and/or a group table entry containing a port number issued by a controller, wherein the port number is that of a service flow corresponding to the flow table entry and/or the group table entry; and
a determining module, which is configured to determine a line card corresponding to the port number according to a pre-stored corresponding relationship between line cards and port numbers of various line cards in a data forwarding device.

9. The device of claim 8, further comprising:
a numbering module, which is configured to number ports of the various line cards uniformly; and
and a reporting module, which is configured to report a numbering result to the controller.

10. A line card determination processing device, which is applied to a controller, comprising:
a first determining module, which is configured to determine a port number of a service flow corresponding to a flow table entry and/or a group table entry according to a pre-obtained unified numbering result for various line cards in a data forwarding device; and
a sending module, which is configured to send the flow table entry and/or the group table entry containing the port number to a main control board of the data forwarding device.

11. The device of claim 10, further comprising:
an obtaining module, which is configured to obtain a processing table type of a to-be-issued flow table entry and/or group table entry, wherein the processing table type includes ingress processing table and egress processing table; and
a second determining module, which is configured to determine a port number type of the service flow corresponding to the flow table entry and/or the group table entry according to the processing table type, wherein the port number type includes input port number and output port number.
